(19) **Europäisches Patentamt European Patent Office Office européen des brevets**

(11) **EP 2 623 747 B1**

(12) **FASCICULE DE BREVET EUROPEEN**

(45) Date de publication et mention
de la délivrance du brevet:
**20.08.2014 Bulletin 2014/34**

(51) Int Cl.:
*F02C 9/00* *(2006.01)*       *B64D 31/00* *(2006.01)*
*G07C 5/08* *(2006.01)*       *G05B 23/02* *(2006.01)*

(21) Numéro de dépôt: **12008023.9**

(22) Date de dépôt: **29.11.2012**

(54) **Procédé et dispositif pour réaliser un contrôle de l'état de santé d'un turbomoteur d'un aéronef pourvu d'au moins un turbomoteur**

Verfahren und Vorrichtung zur Überprüfung des Zustands eines Turbomotors eines Luftfahrzeugs

Method and device for monitoring the health condition of a turbine engine of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.02.2012 FR 1200342**

(43) Date de publication de la demande:
**07.08.2013 Bulletin 2013/32**

(73) Titulaire: **Airbus Helicopters
13725 Marignane Cedex (FR)**

(72) Inventeur: **Camhi, Emmanuel
13710 Fuveau (FR)**

(74) Mandataire: **Pouillot, Laurent Pierre Paul
GPI & Associés
1330, rue Guillibert de la Lauzière
EuroParc de Pichauny, Bât B2
13856 Aix-en-Provence Cedex 3 (FR)**

(56) Documents cités:
**FR-A1- 2 899 640       FR-A1- 2 902 407
US-B2- 7 487 029**

## Description

La présente invention concerne un procédé et un dispositif permettant de réaliser un contrôle de l'état de santé d'un turbomoteur agencé sur un aéronef à voilure tournante, cet aéronef étant pourvu d'au moins un turbomoteur.

En effet, le pilotage d'un giravion s'effectue grâce à la surveillance de nombreux instruments sur le tableau de bord. Ces instruments sont pour la plupart représentatifs du fonctionnement de l'installation motrice du giravion.

Par ailleurs et pour des raisons physiques, il existe de nombreuses limitations que le pilote doit prendre en compte à chaque instant de vol. Ces différentes limitations dépendent généralement de la phase de vol et des conditions extérieures.

Dans ces conditions, la plupart des giravions bimoteurs construits actuellement sont équipés de deux turbomoteurs à turbine libre pour entraîner en rotation le rotor principal d'avancement voire de sustentation. La puissance motrice est alors prélevée sur un étage basse pression de chaque turbine libre, lequel étage est mécaniquement indépendant de l'ensemble du compresseur et de l'étage haute pression du turbomoteur. Chaque turbine libre des turbomoteurs ayant une vitesse de rotation comprise entre 20 000 et 50 000 tours par minute, une boîte de réduction de vitesse est nécessaire pour la liaison au rotor principal dont la vitesse de rotation est sensiblement comprise entre 200 et 400 tours par minute: il s'agit de la boîte de transmission principale de puissance.

Les limitations thermiques du turbomoteur et les limitations en couple de la boîte de transmission principale permettent de définir trois régimes normaux d'utilisation du turbomoteur:

Parmi les régimes connus, on peut citer:

- le régime de décollage associant une puissance maximale au décollage PMD à une durée d'utilisation de l'ordre de cinq à dix minutes,

- le régime maximal continu associant une puissance maximale en continu PMC à une durée d'utilisation illimité,

- le régime transitoire associant une puissance maximale en transitoire PMT à une durée d'utilisation limitée.

Il existe aussi des régimes de surpuissance en urgence sur les aéronefs comprenant au moins deux moteurs, ces régimes étant utilisés lorsque l'un des moteurs tombe en panne:

- un premier régime d'urgence associant une puissance de super urgence OEI30" à une durée de l'ordre de trente secondes consécutives, ce premier régime d'urgence pouvant être utilisé environ trois fois pendant un vol;

- un deuxième régime d'urgence associant une puissance maximale d'urgence OEI2' à durée d'utilisation de l'ordre de deux minutes ;

- un troisième régime d'urgence associant une puissance intermédiaire d'urgence OEIcont à une durée d'utilisation couvrant la fin d'un vol après la panne du turbomoteur par exemple.

Dans ces conditions, le motoriste établit, par calculs ou par essais, les courbes de puissance disponible d'un turbomoteur en fonction de l'altitude et de la température, et cela pour chacun des régimes définis ci-dessus. De même, il détermine la durée de vie du turbomoteur ainsi que la puissance minimale garantie pour chaque régime, cette puissance minimale garantie correspondant à la puissance que fournira le turbomoteur lorsqu'il aura atteint sa durée de vie, un tel turbomoteur étant dénommé « turbomoteur vieilli » par commodité dans la suite du texte.

Pour vérifier que le turbomoteur fonctionne correctement, il convient donc de réaliser un contrôle de santé pour s'assurer que ce turbomoteur a des performances supérieures ou égales aux performances d'un turbomoteur vieilli.

Deux paramètres de surveillance sont notamment importants pour contrôler les performances d'un turbomoteur.

Le turbomoteur étant pourvu d'une turbine haute pression disposée en amont d'un turbine libre, un premier paramètre de surveillance peut être la température, dénommée TET par l'homme du métier, des gaz à l'entrée de la turbine haute pression.

En effet, les aubes de la turbine haute pression du turbomoteur sont soumises à la force centrifuge et à la température TET. Au-delà d'un certain niveau, le matériau constitutif des aubes est soumis à un fluage ce qui a pour conséquence une dilatation allongeant les aubes. Ainsi, ces aubes sont amenées à toucher le carter de la turbine haute pression et donc à se dégrader. La température TET est donc bien directement liée à la dégradation du turbomoteur.

Néanmoins, la température TET étant très difficile à mesurer en raison de son caractère relativement inhomogène, le premier paramètre de surveillance peut être la température, dénommée T45 par l'homme du métier, des gaz à l'entrée de la turbine libre. Cette dernière est une bon indicateur de la température TET, par suite elle est représentative de la dégradation du turbomoteur.

Un premier paramètre de surveillance est donc une température d'un ensemble d'au moins une turbine, cette température pouvant être la température TET des gaz à l'entrée de la turbine haute pression ou la température T45 des gaz à l'entrée de la turbine libre.

Par ailleurs, un deuxième paramètre de surveillance est relatif à la puissance délivrée par le turbomoteur ou encore au couple du turbomoteur, la puissance et le couple du turbomoteur étant intimement liés. Néanmoins, la vitesse de rotation du générateur de gaz du turbomoteur, dénommée Ng par l'homme du métier, étant finalement liée à la puissance délivrée par le turbomoteur, le deuxième paramètre de surveillance retenu peut être cette vitesse de rotation du générateur de gaz.

Par suite, le contrôle de l'état de santé du turbomoteur consiste soit :

- à mesurer le premier paramètre de surveillance puis à vérifier que la valeur de la puissance courante est supérieure ou égale à la valeur de puissance qu'aurait un turbomoteur vieilli dans les mêmes conditions, ou

- à mesurer le deuxième paramètre de surveillance puis à vérifier que la valeur de la puissance courante est supérieure ou égale à la valeur de puissance qu'aurait un turbomoteur vieilli dans les mêmes conditions.

Dans la négative, le constructeur considère que les résultats du contrôle ne sont pas satisfaisants et entraîne la maintenance du moteur.

Le contrôle de santé doit être effectué de façon rigoureuse car s'il s'avère négatif, c'est-à-dire si les vérifications précitées ne donnent pas des résultats satisfaisants, il aura un impact non négligeable sur une éventuelle immobilisation du giravion et sur les coûts de maintenance de ce dernier.

En effet, dans cette configuration, il convient en premier lieu de s'assurer que le mauvais résultat du contrôle de santé n'est pas la conséquence d'un dysfonctionnement de l'installation motrice, au lieu d'un dysfonctionnement du turbomoteur. En second lieu, il faudra alors éventuellement démonter le turbomoteur pour qu'un opérateur, le constructeur du turbomoteur par exemple, puisse vérifier la dégradation des performances sur un banc d'essais puis remplacer les éléments défectueux.

On comprend donc qu'il est souhaitable de réaliser le contrôle de santé avec le plus grand soin pour ne pas immobiliser un giravion sans raison déterminante. Or, il est parfois difficile de le faire dans de bonnes conditions sur un giravion comprenant une pluralité de turbomoteurs.

Pour un tel aéronef, une première solution consiste à réaliser le contrôle de santé durant un vol de croisière. En effet, un vol de croisière présente l'avantage d'être effectué dans une phase de vol non perturbante avec un turbomoteur en fonctionnement stabilisé. Dès lors, pour réaliser un contrôle de santé en vol, un pilote place l'aéronef dans une phase de vol particulière telle qu'un vol en palier à altitude et vitesse stabilisées pendant plusieurs minutes.

Néanmoins, la puissance développée par les turbomoteurs lors d'un tel vol est très inférieure aux puissances de référence à savoir la puissance maximale au décollage PMD par exemple. Or, le contrôle de santé est d'autant plus précis si la puissance développée par le turbomoteur à contrôler est proche de sa puissance de référence.

De plus, si le résultat d'un contrôle de santé effectué à basse puissance n'est pas satisfaisant, il est courant d'effectuer un contrôle de santé complémentaire à haute puissance. Pour éviter des plaintes de la part des passagers du giravion qui se trouvent dérangés par les vibrations générées en cabine durant un tel vol, le contrôle de santé est alors souvent réalisé durant un vol technique dédié à ce contrôle et donc onéreux.

De plus, sur un giravion bimoteur, il convient de s'assurer que chaque turbomoteur est à même de développer la puissance minimale garantie relative à des régimes de surpuissance. Le contrôle de santé est de préférence réalisé à un régime le plus proche possible, en termes de puissance développée, de ces régimes de surpuissance. De ce fait, les contrôles de santé sont préférentiellement mis en oeuvre à une puissance proche de la puissance maximale au décollage PMD ce qui est incompatible avec un vol de croisière.

Une deuxième solution consiste alors à réaliser le contrôle de santé durant un vol de croisière rapide, en augmentant la puissance développée par les turbomoteurs pour se rapprocher de la puissance maximale au décollage PMD par exemple. Toutefois, bien qu'efficace, cette solution engendre des plaintes de la part des passagers du giravion qui se trouvent importunés par les vibrations générées en cabine et résultant des conditions du vol.

Pour y remédier, le propriétaire d'un giravion bimoteur peut réaliser un vol technique spécifique dédié à ce contrôle de santé en l'absence de passagers. L'impact est non négligeable sur les coûts de maintenance du giravion dans la mesure où la périodicité des contrôles de santé est généralement fixée entre 25 et 100 heures par le fabricant du turbomoteur. De même, chaque vol technique est réalisé en lieu et place d'un vol payant ce qui induit finalement un coût important pour le propriétaire du giravion.

Une troisième solution consiste à augmenter seulement la puissance développée par le turbomoteur à contrôler. Bien que séduisante, cette solution présente des inconvénients.

En effet, le giravion étant bimoteur, les turbomoteurs sont alors désalignés en termes de puissance. Par conséquent, les calculateurs des turbomoteurs modernes détectent une perte de puissance. Dans ces conditions, une alarme rouge est activée par les calculateurs pour indiquer au pilote qu'il doit impérativement procéder à l'atterrissage de l'aéronef. De plus, cette détection entraîne l'armement des régimes de surpuissance.

Le document FR 2 899 640 décrit un procédé pour réaliser un contrôle de santé d'au moins un premier turbomoteur d'un giravion, ce giravion étant pourvu d'un premier et d'un deuxième turbomoteurs ayant respectivement avant le contrôle de santé une première et une deuxième valeurs courantes pour un paramètre de surveillance ainsi qu'une première et une deuxième valeurs finales réelles pour ce paramètre de surveillance durant ledit contrôle de santé. On réalise successivement les étapes suivantes :

a) on détermine la première valeur finale réelle dudit paramètre de surveillance dudit premier turbomoteur à atteindre afin de réaliser ledit contrôle de santé avec précision,

b) on estime que ladite deuxième valeur finale réelle dudit paramètre de surveillance dudit deuxième turbomoteur est égale à ladite deuxième valeur courante dudit deuxième turbomoteur,

c) on détermine la différence entre ladite première valeur finale réelle et ladite deuxième valeur finale réelle,

d) si ladite différence est supérieure à un seuil prédéterminé, on recadre la valeur de ladite deuxième valeur finale réelle, afin que la différence entre ladite première valeur finale réelle et ladite deuxième valeur finale réelle soit inférieure au dit seuil prédéterminé durant le contrôle de santé.

e) on commande ledit premier turbomoteur pour que ladite première valeur courante avant ledit contrôle atteigne ladite première valeur finale réelle durant ledit contrôle, et on commande ledit deuxième turbomoteur pour que ladite deuxième valeur courante avant ledit contrôle atteigne ladite deuxième valeur finale réelle.

Selon une autre technique, un contrôle de santé peut aussi être réalisé au sol dans une configuration proche du décollage. Par exemple sur un aéronef bimoteur, un turbomoteur peut être mis au ralenti alors que l'autre turbomoteur développe une puissance proche de la puissance intermédiaire d'urgence OEIcont.

Bien qu'intéressant, un contrôle de santé réalisé au sol peut être imprécis du fait de l'effet de sol subi par l'aéronef.

En outre, on comprend qu'un contrôle de santé est effectué en comparant les performances du turbomoteur testé avec des performances minimales, telles que des performances déclarées au banc d'essais par le constructeur. Le contrôle de santé permet de déterminer une marge d'un paramètre de surveillance d'un turbomoteur par rapport à une valeur limite du paramètre de surveillance.

Or selon le moteur, les contrôles de santé ne sont pas réalisés selon la même procédure, chaque constructeur établissant sa propre procédure.

De plus, le calcul des marges de fonctionnement d'un turbomoteur dépend du régime mis en oeuvre, des conditions atmosphériques, des conditions de stabilisation du moteur, et des effets d'avionnage dénommés parfois « pertes d'installation ».

Les effets d'avionnage induisent des pertes de puissance dues par exemple aux pertes d'installation comprenant des pertes de charges dans les entrées d'air des turbomoteurs ou encore aux distorsions de pressions voire même aux tuyères. De plus, les effets d'avionnage résultent aussi des prélèvements de puissance réalisés sur le turbomoteur par des accessoires dont le fonctionnement dépend de l'altitude de l'aéronef et de la température extérieure notamment.

En effet, ces effets d'avionnage sont à l'origine de différences entre la valeur de paramètres de surveillance lorsque qu'un turbomoteur est agencé sur un banc d'essais et lorsque ce turbomoteur est agencé sur le giravion. Ces effets d'avionnage influencent donc la comparaison des résultats du contrôle de santé avec les résultats obtenus sur un banc d'essais pour un turbomoteur vieilli par exemple.

Les marges d'un turbomoteur peuvent donc différées d'un contrôle de santé à un autre pour des raisons indépendantes de l'état de santé du turbomoteur. Dès lors, il peut être difficile d'effectuer un suivi de tendance de la santé de ce turbomoteur.

On connaît aussi les documents FR 2902407 et US 7487029.

La présente invention a pour objet de proposer un procédé et un dispositif pour optimiser des contrôles de santé d'un turbomoteur d'un aéronef à voilure tournante et favoriser le suivi de ces contrôles de santé.

Selon l'invention, on met en oeuvre un procédé pour réaliser un contrôle de santé d'au moins un turbomoteur à surveiller d'un aéronef à voilure tournante selon la revendication 1, ce turbomoteur comportant un générateur de gaz et un ensemble comprenant au moins une turbine libre.

Durant une étape d'acquisition du contrôle de santé, on stabilise l'aéronef, et on acquiert la valeur de surveillance d'au moins un paramètre de surveillance du turbomoteur.

Par exemple, chaque paramètre de surveillance du turbomoteur peut être choisi dans une liste incluant : un couple développé par le turbomoteur, une température TET des gaz à l'entrée d'une turbine haute pression dudit ensemble, une température T45 des gaz à l'entrée d'une turbine libre dudit ensemble, une vitesse de rotation Ng du générateur de gaz.

Le couple peut être mesuré sur un arbre mis en rotation par la turbine libre du turbomoteur.

D'autres paramètres sont éventuellement envisageables.

Durant une étape d'évaluation du contrôle de santé, on détermine au moins une marge de fonctionnement du turbomoteur en comparant une valeur de surveillance mesurée à une valeur limite définie par le constructeur.

Ce procédé est notamment remarquable en ce que durant une étape de développement réalisée avant l'étape d'acquisition et l'étape d'évaluation, on quantifie des effets d'avionnage de l'aéronef par essais, simulations ou équivalents, pour une pluralité de valeurs d'essais d'une vitesse de rotation réduite Ng' dudit générateur de gaz. Cette vitesse de rotation réduite Ng' est égale à la vitesse de rotation du générateur de gaz modulée par la température extérieure environnante audit aéronef à voilure tournante. Ainsi, la pluralité de valeurs d'essais s'étend dune valeur d'essais minimale et à une valeur d'essais maximale.

Par exemple, la vitesse de rotation réduite Ng' est obtenue à l'aide de la relation suivante :

$$Ng' = Ng\sqrt{\frac{288.15}{T0}}$$

où « Ng » représente la vitesse de rotation du générateur de gaz concerné, « T0 » représente la température extérieure à l'aéronef en degrés kelvin.

On note que la vitesse de rotation réduite peut être exprimée en pourcentage d'une vitesse de rotation du générateur de gaz à une puissance considérée. Par exemple, on détermine les effets d'avionnage de l'aéronef lorsque ladite vitesse de rotation réduite Ng' est égale à 93%, 95%, 98% et 102% de la vitesse de rotation du générateur de gaz à une puissance considérée.

Pour chaque régime de fonctionnement du turbomoteur, il est donc possible de quantifier les effets d'avionnage.

Dès lors, durant l'étape d'acquisition :

a) on augmente la vitesse de rotation du générateur de gaz jusqu'à ce que le turbomoteur à surveiller développe une puissance maximale,

b) on réduit ladite vitesse de rotation du générateur de gaz jusqu'à ce que la vitesse de rotation réduite atteigne une valeur d'essais,

c) on stabilise l'aéronef en maintenant constante ladite vitesse de rotation réduite Ng' pendant une durée de stabilisation définie par le constructeur et on effectue l'acquisition de chaque valeur de surveillance.

En effet, l'invention propose de prendre en considération des pertes d'avionnage précisément mesurées lors de l'étape de développement. De plus, ces pertes d'avionnage sont associées à une vitesse de rotation Ng' réduite ne dépendant pas des conditions extérieures pour permettre de comparer les résultats de plusieurs contrôles de santé distincts.

Cependant, pour optimiser les résultats du contrôle de santé, le turbomoteur surveillé doit développer une puissance maximisée. Cette puissance maximisée peut dépendre des conditions extérieures et du vieillissement du turbomoteur. Il est donc délicat de savoir quelle valeur d'essais de la vitesse de rotation réduite induit cette puissance maximale.

Dès lors, on augmente dans un premier temps la vitesse de rotation du générateur de gaz jusqu'à ce que le turbomoteur à surveiller développe une puissance maximale, et donc jusqu'à atteindre une butée prédéterminée par le constructeur.

A partir de cet état, on ralentit le turbomoteur jusqu'à ce que la vitesse de rotation réduite de ce turbomoteur atteigne la valeur d'essais la plus proche n'engendrant pas un dépassement de la puissance maximale.

On comprend que si la puissance maximale est atteinte pour une valeur de la vitesse de rotation réduit Ng' égale à la vitesse d'essais maximale, on ne réduit pas la vitesse de rotation du générateur de gaz.

Par ailleurs, on stabilise l'aéronef en maintenant constante ladite vitesse de rotation réduite Ng'. En effet, les turbomoteurs sont classiquement testés sur un banc d'essais dans des conditions stables. Pour reproduire ces conditions, on stabilise donc l'aéronef.

En parallèle ou suite à la stabilisation, on effectue l'acquisition de chaque valeur de surveillance.

Durant une étape d'évaluation du contrôle de santé, on détermine alors au moins une marge de fonctionnement du turbomoteur en utilisant une valeur de surveillance et les effets d'avionnage correspondant à la vitesse de rotation réduite à laquelle l'aéronef est stabilisé, et on fournit à un opérateur chaque marge de fonctionnement.

Par exemple, on peut mesurer une valeur de surveillance égale à une température mesurée de 800 degrés Celsius pour une vitesse de rotation réduite Ng' de 95%.

Pour cette vitesse de rotation réduite Ng' de 95% et au régime considéré, l'étape de développement peut avoir identifié des effets d'avionnage de +50 degrés Celsius.

De plus, la valeur limite définie pour ce paramètre et dans ces conditions de fonctionnement est de 900 degrés Celsius.

La marge de fonctionnement est alors égale à la valeur limite moins les effets d'avionnage moins la valeur mesurée. La marge de fonctionnement est alors de 50 degrés Celsius.

Durant une étape de traitement, on effectue la maintenance du turbomoteur si la marge de fonctionnement est inférieure à un seuil limite défini par le constructeur.

Ce procédé permet donc de réaliser un contrôle de santé à une puissance optimale et dans des conditions ne dépendant pas des conditions extérieures, tout en prenant en considération des effets d'avionnage précis.

Ce procédé peut de plus comporter une ou plusieurs des caractéristiques qui suivent.

L'exemple présenté précédemment suggère de contrôler la température d'une partie du turbomoteur, la température TET des gaz à l'entrée d'une turbine haute pression de l'ensemble de turbines ou une température T45 des gaz à l'entrée d'une turbine libre dudit ensemble.

La marge en température est représentative de la marge en puissance du turbomoteur.

Toutefois, il est possible d'évaluer directement la marge en puissance.

Ainsi, durant la phase d'évaluation on détermine une puissance de surveillance qui est fonction d'un couple développé par le turbomoteur et une vitesse d'évolution Nr en rotation de la voilure tournante.

On peut se référer à la littérature pour déterminer comment obtenir la puissance de surveillance à partir de ces deux données.

Dès lors, on détermine une marge de fonctionnement en comparant la différence de la puissance de surveillance et des effets d'avionnage correspondant à la vitesse de rotation réduite durant la phase d'acquisition à une puissance théorique minimale définie par le constructeur.

Les effets d'avionnage sont alors exprimés en termes de puissance, et non pas en température.

Selon un autre aspect, durant l'étape d'acquisition, la puissance maximale est atteinte lorsque :

- la vitesse de rotation réduite atteint la valeur d'essais maximale, ou

- un paramètre de surveillance du turbomoteur atteint une limite définie par le constructeur

Pour chaque régime de fonctionnement, le constructeur peut définir une limite. Le constructeur définit donc pour chaque vitesse de rotation du générateur de gaz une température limite de l'ensemble de turbine.

De plus, pour ne pas dépasser les capacités d'une boîte de transmission de puissance mise en rotation par le turbomoteur, le constructeur peut fixer un couple limite.

Selon une variante, si l'aéronef comporte au moins deux turbomoteurs, il est possible d'appliquer les deux critères précédents.

Toutefois, l'augmentation de la vitesse de rotation du générateur de gaz du turbomoteur à tester risque de déclencher une alarme de désalignement entre les turbomoteurs.

Notamment à cet effet, on peut générer une alerte durant ladite étape d'acquisition afin qu'un pilote comprenne que l'alarme est provoqué par le processus de contrôle.

On peut aussi inhiber cette alarme de désalignement durant l'étape d'acquisition.

Cependant, selon une réalisation préférée, ledit aéronef comprenant au moins deux turbomoteurs, durant ladite étape d'acquisition, ladite puissance maximale est atteinte lorsque :

- la vitesse de rotation réduite atteint la valeur d'essais maximale, ou

- un paramètre de surveillance dudit turbomoteur atteint une limite définie par le constructeur, ou

- une différence entre un premier couple développé par le turbomoteur contrôlé et un deuxième couple développé par un deuxième turbomoteur atteint un seuil défini par le constructeur.

On comprend que le seuil est fixé de manière à être inférieur au niveau de déclenchement d'une alarme de désalignement.

Eventuellement, lorsque l'aéronef comprend au moins deux turbomoteurs, à l'issue de l'étape d'acquisition, on peut synchroniser les turbomoteurs pour que chaque turbomoteur fournisse une même puissance.

Selon un autre aspect, si l'aéronef comprend deux turbomoteurs, lors de l'étape d'acquisition on peut diminuer la vitesse de rotation du générateur de gaz du turbomoteur ne subissant pas le contrôle de santé afin que les deux turbomoteurs fournissent conjointement le double d'une puissance maximale continue définie par le constructeur pour chaque turbomoteur.

Néanmoins, la durée de la phase d'acquisition doit être minimisée pour respecter les limitations du constructeur.

Outre un procédé, l'invention vise un dispositif selon la revendication 10 mettant en oeuvre ce procédé pour réaliser un contrôle de santé d'au moins un turbomoteur d'un aéronef à voilure tournante, le turbomoteur comportant un générateur de gaz et un ensemble comprenant au moins une turbine. Ce dispositif comporte un dispositif de contrôle d'au moins un turbomoteur comprenant :

- un moyen de stockage contenant des effets d'avionnage de l'aéronef pour une pluralité de valeurs d'essais d'une vitesse de rotation réduite Ng' du générateur de gaz, chaque vitesse de rotation réduite Ng' étant égale à la vitesse de rotation du générateur de gaz modulée par une température extérieure environnante au aéronef à voilure tournante, ladite pluralité de valeurs d'essais allant dune valeur d'essais minimale à une valeur d'essais maximale, et

- un moyen de contrôle pour :

    a) augmenter la vitesse de rotation du générateur de gaz jusqu'à ce que le turbomoteur développe une puissance maximale,

    b) réduire ladite vitesse de rotation jusqu'à ce que la vitesse de rotation réduite atteigne une valeur d'essais,

c) stabiliser l'aéronef en maintenant constante ladite vitesse de rotation réduite Ng' pendant une durée de stabilisation définie par le constructeur et effectuer l'acquisition de chaque valeur de surveillance, et

- un moyen de calcul pour déterminer au moins une marge de fonctionnement en utilisant ladite valeur de surveillance ainsi que les effets d'avionnage et une valeur limite correspondant à la vitesse de rotation réduite à laquelle l'aéronef est stabilisé, et

- un moyen de transmission pour transmettre chaque marge de fonctionnement à un opérateur, et

- une pluralité de capteurs pour mesurer chaque valeur de surveillance et ladite vitesse de rotation du générateur de gaz de l'aéronef.

Le moyen de transmission peut comprendre une sortie du moyen de calcul et éventuellement un moyen de visualisation de chaque marge de fonctionnement déterminée.

Ce dispositif peut comprendre une ou plusieurs des caractéristiques qui suivent.

Par exemple, ce dispositif de contrôle comporte un moyen de calcul et un moyen de contrôle par moteur.

Le moyen de calcul et le moyen de contrôle peuvent être un équipement connu sous l'acronyme FADEC soit « Full Authority Digital Engine Control »

Cet équipement peut inclure le moyen de stockage et être relié aux capteurs adéquats.

En outre, ce dispositif peut comporter un moyen manoeuvrable par un opérateur pour ordonner la mise en oeuvre de dudit procédé en vol.

Eventuellement, ce dispositif peut comprendre des moyens usuels pour réaliser un contrôle de santé au sol selon les techniques connues

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un dispositif de contrôle appliqué sur un aéronef monomoteur,

- la figure 2, un schéma présentant un dispositif de contrôle appliqué sur un aéronef multi-moteur, et

- la figure 3, un schéma présentant le procédé.

Les éléments présents dans plusieurs figures distinctes sont affectés d'une seule et même référence.

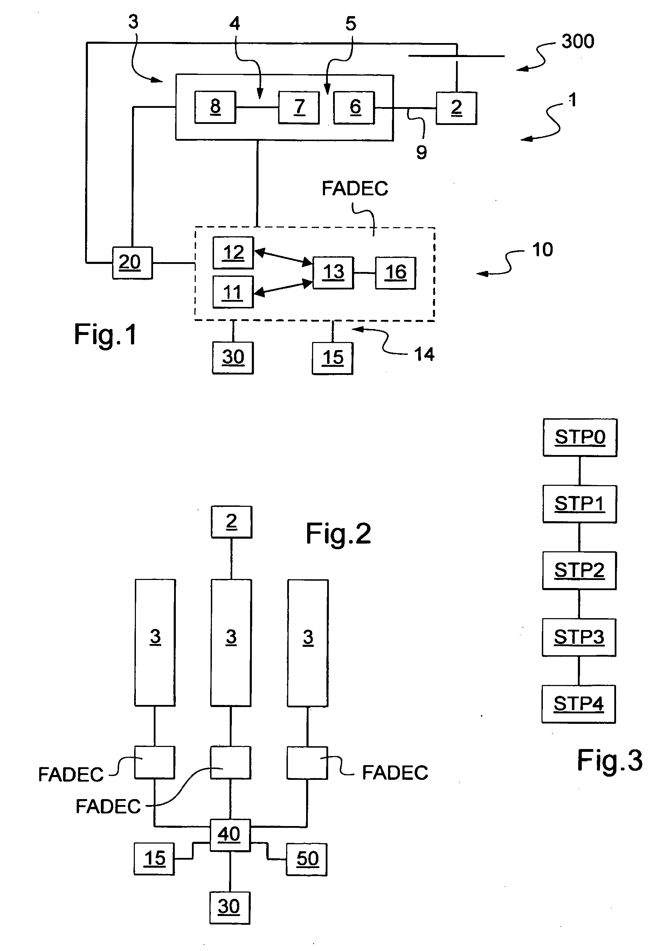

La figure 1 présente un aéronef 1, par exemple un aéronef muni d'une voilure tournante 300.

L'aéronef 1 comporte au moins un turbomoteur 3 pour entraîner la voilure tournante 300 au travers d'une boîte de transmission de puissance 2. Chaque turbomoteur comporte un générateur de gaz 4 et un ensemble 5 de turbine.

Par exemple, le générateur de gaz comporte un compresseur 8 coopérant avec une turbine haute pression 7 de l'ensemble 5.

De plus, l'ensemble 5 de turbine inclut une turbine libre 6 liée à la boîte de transmission de puissance 2 par une chaîne cinématique 9. Cette chaîne cinématique 9 est munie par exemple d'un arbre de sortie mis en rotation par la turbine libre.

Plus précisément, l'aéronef 1 de la figure 1 présente un turbomoteur 3.

Indépendamment du nombre de turbomoteurs, l'invention propose de réaliser le contrôle de la santé d'au moins un turbomoteur en appliquant le procédé schématisé sur la figure 3.

Au cours d'une étape de développement STP0 réalisée de fait avant un contrôle de santé, le constructeur quantifie des effets d'avionnage de l'aéronef 1 sur la puissance développée par chaque turbomoteur.

Les effets d'avionnage sont dus par exemple aux pertes d'installation comprenant des pertes de charges dans les entrées d'air des turbomoteurs ou encore aux distorsions de pressions voire même aux tuyères. De plus, les effets d'avionnage incluent les prélèvements de puissance réalisés sur le turbomoteur par des accessoires dont le fonctionnement dépend de l'altitude de l'aéronef et/ ou de la température extérieure notamment.

Les effets d'avionnage tendent donc à réduire la puissance transmise à la voilure tournante par chaque turbomoteur.

Ainsi, pour une pluralité de valeurs d'essais d'une vitesse de rotation réduite Ng' du générateur de gaz 4 d'un turbomoteur correspondant à une pluralité de régime de fonctionnement du turbomoteur, le constructeur détermine les effets d'avionnage.

Les valeurs d'essais sont comprises entre une valeur d'essais minimale et une valeur d'essais maximale pour chaque régime de fonctionnement du turbomoteur.

En référence à la figure 1, un dispositif de contrôle 10 de la santé d'un turbomoteur comporte alors un moyen de stockage 11 contenant les effets d'avionnage déterminés.

En référence à la figure 3, durant une étape d'acquisition STP1, on stabilise l'aéronef 1, et on acquiert la valeur de surveillance d'au moins un paramètre de surveillance du turbomoteur 3. On peut acquérir la valeur de surveillance d'au moins un paramètre de surveillance du turbomoteur à choisir dans une liste incluant : un couple Tq développé par le turbomoteur, une température TET des gaz à l'entrée d'une turbine haute pression 7 dudit ensemble 5, une température T45 des gaz à l'entrée d'une turbine libre 6 dudit ensemble 5 et une vitesse Ng de rotation du générateur de gaz.

En référence à la figure 1, le dispositif de contrôle 10 comporte donc une pluralité de capteurs 20 pour effectuer les mesures adéquates.

Ce jeu de capteurs peut inclure par exemple un capteur de température TET des gaz à l'entrée d'une turbine haute pression 7, un capteur de une température T45 des gaz à l'entrée d'une turbine libre 6, un capteur de couple Tq par exemple agencé sur un arbre de sortie du turbomoteur et un capteur de vitesse de rotation Ng du générateur de gaz.

Pour obtenir une information de puissance à partir d'un capteur de couple Tq, le jeu de capteurs 20 peut inclure un capteur de la vitesse d'évolution Nr de la voilure tournante 3 ou de la vitesse de rotation de l'arbre de sortie équipé du capteur de couple par exemple.

Dès lors, durant l'étape d'acquisition STP1, un moyen de contrôle 12 du dispositif de contrôle 10 commande le turbomoteur 3 à contrôler pour :

    a) augmenter la vitesse de rotation du générateur de gaz jusqu'à ce que ledit turbomoteur développe une puissance maximale,

    b) réduire ladite vitesse de rotation jusqu'à ce que la vitesse de rotation réduite Ng' atteigne une valeur d'essais,

    c) stabiliser l'aéronef en maintenant constante ladite vitesse de rotation réduite Ng' pendant une durée de stabilisation définie par le constructeur de l'ordre de 5 minutes et effectuer l'acquisition de chaque valeur de surveillance.

On comprend que le contrôle de santé peut être réalisé pour contrôler une pluralité de paramètres de surveillance, ou bien un unique paramètre de surveillance.

Le moyen de contrôle 12 acquiert alors des données relatives à un ou plusieurs paramètres de surveillance. L'expression « chaque valeur de surveillance » reflète les diverses possibilités.

En référence à la figure 3, durant une étape d'évaluation STP2 du contrôle de santé, on détermine au moins une marge de fonctionnement du turbomoteur en comparant chaque valeur de surveillance acquise à une valeur limite définie par le constructeur.

Dès lors, en référence à la figure 1 le dispositif de contrôle comporte un organe de stockage 16 mémorisant une valeur limite pour chaque valeur d'essais à chaque régime et pour chaque paramètre de surveillance considéré.

Une telle valeur limite peut provenir d'un essai réalisé sur un banc d'essais sur la base d'un turbomoteur vieilli, sans prendre en considération des effets d'avionnage.

De plus, le dispositif de contrôle comporte un moyen de calcul 13 déterminant une marge de fonctionnement pour chaque paramètre de surveillance considéré.

Ce moyen de calcul 13 détermine alors au moins une marge de fonctionnement en retranchant à une valeur de surveillance les effets d'avionnage correspondant à la vitesse de rotation réduite à laquelle l'aéronef est stabilisé et la valeur limite adéquate.

La marge de fonctionnement peut être une marge de température TET des gaz à l'entrée d'une turbine haute pression 7, une marge de température T45 des gaz à l'entrée d'une turbine libre 6, une marge de puissance évaluée à partie du couple développé par le turbomoteur surveillé.

Par exemple, le moyen de calcul 13 évalue une puissance de surveillance qui est fonction du produit d'un couple Tq développé par le turbomoteur 3, d'une vitesse d'évolution Nr en rotation de la voilure tournante, et d'un coefficient de réduction déterminé par le constructeur. Dès lors, le moyen de calcul 13 détermine une marge de fonctionnement en puissance en comparant la différence de la puissance de surveillance et des effets d'avionnage correspondant à la vitesse de rotation réduite Ng' durant la phase d'acquisitions STP1 à une puissance théorique minimale définie par le constructeur.

Le dispositif de contrôle 10 inclut alors un moyen de transmission 14 de chaque marge de fonctionnement à un opérateur.

Ce moyen de transmission peut comporter une sortie du moyen de calcul 13 et un moyen de visualisation 15, tel qu'un écran ou une imprimante par exemple.

On fournit ainsi à un opérateur chaque marge de fonctionnement déterminée.

Enfin en référence à la figure 3, durant une étape de traitement STP3, on effectue la maintenance du turbomoteur si une marge de fonctionnement est inférieure à un seuil limite défini par le constructeur.

Par ailleurs, on note que le moyen de calcul 13, le moyen de contrôle 12, voire le moyen de stockage 11 et l'organe de stockage 16 peuvent être des parties constitutives d'un calculateur moteur FADEC.

Chaque moteur d'un aéronef multi-moteurs peut alors posséder un tel FADEC.

De plus, le dispositif de contrôle 10 peut comporter un moyen manoeuvrable 30 par un opérateur pour mettre en marche le contrôle de santé.

L'activation du moyen manoeuvrable peut générer une alerte pour signaler la procédure de contrôle à un opérateur, tel qu'un pilote.

Selon un autre aspect, lorsque l'aéronef comporte un unique turbomoteur, le moyen de contrôle 12 peut considérer qu'une puissance maximale est atteinte quand :

- la vitesse de rotation réduite atteint la valeur d'essais maximale, ou

- un paramètre de surveillance dudit turbomoteur atteint une limite définie par le constructeur.

En référence à la figure 2, l'aéronef peut comporter au moins deux turbomoteurs 3 pour entraîner la voilure tournante 300 au travers d'une boîte de transmission de puissance 2.

Dans ces conditions, il est possible de contrôler un turbomoteur après l'autre en appliquant le procédé explicité précédemment.

Eventuellement, le moyen manoeuvrable 30 est relié à un calculateur avionique 40 communiquant avec un moyen d'alerte 50 et un moyen de signalisation ou de visualisation.

De plus, le calculateur avionique 40 ordonne au calculateur moteur FADEC du turbomoteur à contrôler d'effectuer un contrôle de santé et lui fournir les résultats de ce contrôle de santé.

De plus, en parallèle de l'accélération du turbomoteur à contrôler, le calculateur avionique peut diminuer la vitesse de rotation du générateur de gaz 4 d'au moins un des autres turbomoteurs ne subissant pas le contrôle de santé. A cet effet, le calculateur avionique transmet un ordre aux calculateurs FADEC concernés afin que les turbomoteurs fournissent conjointement la puissance maximale continue ou la puissance maximale au décollage définies par le constructeur pour chaque turbomoteur multipliée par le nombre de turbomoteurs, soit par trois selon l'exemple représenté.

A l'issue de l'étape d'acquisition STP1, le calculateur avionique peut synchroniser lesdits turbomoteurs 3 pour que chaque turbomoteur 3 fournisse une même puissance.

Par ailleurs, la désynchronisation des turbomoteurs peut générer une alarme de désynchronisation. Le cas échéant, le calculateur avionique peut désactiver cette alarme durant le contrôle de santé ou signaler le contrôle à un moyen d'alerte 50.

Selon un autre aspect, durant l'étape d'acquisition STP1, le moyen de contrôle peut considérer que la puissance maximale du turbomoteur est atteinte lorsque :

- la vitesse de rotation réduite atteint la valeur d'essais maximale, ou

- un paramètre de surveillance du turbomoteur atteint une limite définie par le constructeur, ou

- une différence entre un premier couple développé par le turbomoteur contrôlé et un deuxième couple développé par un deuxième turbomoteur atteint un seuil défini par le constructeur afin d'éviter le déclenchement d'une alarme de désynchronisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

**1.** Procédé pour réaliser un contrôle de santé d'au moins un turbomoteur (3) à surveiller d'un aéronef (1) à voilure tournante (300), ledit turbomoteur (3) comportant un générateur de gaz (4) et un ensemble (5) comprenant au moins une turbine (6, 7) au cours duquel :

- durant une étape d'acquisition (STP1) du contrôle de santé, on stabilise ledit aéronef, et on acquiert la valeur de surveillance d'au moins un paramètre de surveillance (T45, TET, Tq, Ng) dudit turbomoteur (3), et

- durant une étape d'évaluation (STP2) du contrôle de santé, on détermine au moins une marge de fonctionnement du turbomoteur en comparant ladite valeur de surveillance à une valeur limite définie par le constructeur,

**caractérisé en ce que :**

- durant une étape de développement (STP0) réalisée avant l'étape d'acquisition et l'étape d'évaluation, on quantifie des effets d'avionnage dudit aéronef (1) pour une pluralité de valeurs d'essais d'une vitesse de rotation réduite (Ng') dudit générateur de gaz (4), ladite vitesse de rotation réduite (Ng') étant égale à la vitesse de rotation (Ng) du générateur de gaz (4) de l'aéronef modulée par la température extérieure (T0) environnante audit aéronef, ladite pluralité de valeurs d'essais allant d'une valeur d'essais minimale et à une valeur d'essais maximale,

- durant ladite étape d'acquisition (STP1) :

a) on augmente la vitesse de rotation dudit générateur de gaz (4) jusqu'à ce que ledit turbomoteur développe une puissance maximale,

b) on réduit ladite vitesse de rotation du générateur de gaz (4) jusqu'à ce que la vitesse de rotation réduite (Ng') atteigne une valeur d'essais,

c) on stabilise l'aéronef en maintenant constante ladite vitesse de rotation réduite (Ng') pendant une durée de stabilisation définie par le constructeur et on effectue l'acquisition de chaque valeur de surveillance, et

- durant ladite étape d'évaluation (STP2) du contrôle de santé, on détermine au moins une marge de fonctionnement en utilisant une valeur de surveillance et les effets d'avionnage correspondant à la vitesse de rotation réduite à laquelle l'aéronef est stabilisé, et on fournit à un opérateur chaque marge de fonctionnement, et

- durant une étape de traitement (STP3), on effectue la maintenance du turbomoteur si ladite marge de fonctionnement est inférieure à un seuil limite défini par le constructeur.

2. Procédé selon la revendication 1, **caractérisé en ce que**, durant l'étape d'acquisition (STP1), on acquiert la valeur de surveillance d'au moins un paramètre de surveillance dudit turbomoteur à choisir dans une liste incluant : un couple développé par le turbomoteur, une température (TET) des gaz à l'entrée d'une turbine haute pression (7) dudit ensemble (5), une température (T45) des gaz à l'entrée d'une turbine libre (6) dudit ensemble (5) et une vitesse de rotation (Ng) du générateur de gaz.

3. Procédé selon l'une quelconque des revendications 1 à 2, **caractérisé en ce que**, durant la phase d'évaluation (STP2) on détermine une puissance de surveillance qui est fonction d'un couple (Tq) développé par le turbomoteur (3) et d'une vitesse d'évolution (Nr) en rotation de ladite voilure tournante (300), puis on détermine une marge de fonctionnement en comparant la différence de la puissance de surveillance et des effets d'avionnage correspondant à la vitesse de rotation réduite (Ng') durant la phase d'acquisition (STP1) à une puissance théorique minimale définie par le constructeur.

4. Procédé selon l'une quelconque des revendications 1 à 3, **caractérisé en ce que**, durant ladite étape d'acquisition (STP1), ladite puissance maximale est atteinte lorsque :

   - la vitesse de rotation réduite atteint la valeur d'essais maximale, ou
   - un paramètre de surveillance dudit turbomoteur atteint une limite définie par le constructeur

5. Procédé selon l'une quelconque des revendications 1 à 4, **caractérisé en ce que**, ledit aéronef comprenant au moins deux turbomoteurs (3), durant ladite étape d'acquisition (STP1) ladite puissance maximale est atteinte lorsque :

   - la vitesse de rotation réduite atteint la valeur d'essais maximale, ou
   - un paramètre de surveillance dudit turbomoteur atteint une limite définie par le constructeur, ou
   - une différence entre un premier couple développé par le turbomoteur contrôlé et un deuxième couple développé par un deuxième turbomoteur atteint un seuil défini par le constructeur.

6. Procédé selon l'une quelconque des revendications 1 à 5, **caractérisé en ce que** ledit aéronef comprenant au moins deux turbomoteurs (3), à l'issue de l'étape d'acquisition (STP1) on synchronise lesdits turbomoteurs (3) pour que chaque turbomoteur (3) fournisse une même puissance.

7. Procédé selon l'une quelconque des revendications 1 à 6, **caractérisé en ce qu'**on génère une alerte durant ladite étape d'acquisition (STP1).

8. Procédé selon l'une quelconque des revendications 1 à 7, **caractérisé en ce que** ledit aéronef comprenant deux turbomoteurs (3), lors de l'étape d'acquisition (STP1) on diminue la vitesse de rotation du générateur de gaz (4) du turbomoteur (1) ne subissant pas le contrôle de santé afin que les deux turbomoteurs fournissent conjointement le double d'une puissance maximale continue définie par le constructeur pour chaque turbomoteur.

9. Procédé selon l'une quelconque des revendications 1 à 8, **caractérisé en ce que** la dite vitesse de rotation réduit (Ng') est obtenue à l'aide de la relation suivante :

$$Ng' = Ng\sqrt{\frac{288.15}{T0}}$$

où « Ng » représente la vitesse de rotation du générateur de gaz concerné, « T0 » représente la température extérieure à l'aéronef en degrés kelvin.

10. Dispositif de contrôle (10) mettant en oeuvre le procédé selon l'une quelconque des revendications 1 à 9 pour réaliser un contrôle de santé d'au moins un turbomoteur (3) d'un aéronef (1) à voilure tournante, ledit turbomoteur (3) comportant un générateur de gaz (4) et un ensemble (5) comprenant au moins une turbine (6,7), **caractérisé en ce que** ce dispositif de contrôle (10) d'au moins un turbomoteur (3) comprend :

   - un moyen de stockage (11) contenant des effets d'avionnage dudit aéronef (1) pour une pluralité de valeurs d'essais d'une vitesse de rotation réduite (Ng') dudit générateur de gaz, une vitesse de rotation réduite (Ng') étant égale à la vitesse de rotation (Ng) du générateur de gaz (4) modulée par une température extérieure (T0) environnante à l'aéronef, ladite pluralité de valeurs d'essais allant dune valeur d'essais minimale à une valeur d'essais maximale, et
- un moyen de contrôle (12) pour :

a) augmenter la vitesse de rotation dudit générateur de gaz jusqu'à ce que ledit turbomoteur développe une puissance maximale,
b) réduire ladite vitesse de rotation jusqu'à ce que la vitesse de rotation réduite atteigne une valeur d'essais,
c) stabiliser l'aéronef en maintenant constante ladite vitesse de rotation réduite Ng' pendant une durée de stabilisation définie par le constructeur et effectuer l'acquisition de chaque valeur de surveillance, et

- un moyen de calcul (13) pour déterminer au moins une marge de fonctionnement en utilisant ladite valeur de surveillance ainsi que les effets d'avionnage et une valeur limite définie par le constructeur correspondant à la vitesse de rotation réduite à laquelle l'aéronef est stabilisé, et
- un moyen de transmission (14) pour transmettre chaque marge de fonctionnement à un opérateur, et
- une pluralité de capteurs (20) pour mesurer chaque valeur de surveillance et ladite vitesse de rotation du générateur de gaz de l'aéronef

11. Dispositif selon la revendication 10,
**caractérisé en ce que** ce dispositif de contrôle (10) comporte un moyen de calcul et un moyen de contrôle par moteur.

12. Dispositif selon la revendication 10,
**caractérisé en ce que** ce dispositif comporte un moyen manoeuvrable (30) par un opérateur pour ordonner la mise en oeuvre de dudit procédé en vol.

**Patentansprüche**

1. Verfahren zur Überprüfung des Zustands mindestens eines zu überwachenden Turbomotors (3) eines Drehflügel-Luftfahrzeugs (300), wobei der Turbomotor (3) einen Gaserzeuger (4) und eine Baugruppe (5) aufweist, die mindestens eine Turbine (6, 7) aufweist, bei dem:

- während eines Erfassungsschritts (STP1) der Überprüfung des Zustands das Luftfahrzeug stabilisiert wird und der Überwachungswert mindestens eines Überwachungsparameters (T45, TET, Tq, Ng) des Turbomotors (3) erfasst wird, und
- während eines Auswertungsschritts (STP2) der Überprüfung des Zustands mindestens ein Betriebsbereich des Turbomotors bestimmt wird durch Vergleich des Überwachungswertes mit einem von dem Konstrukteur festgelegten Grenzwert,

**dadurch gekennzeichnet, dass**:

- während eines Vorbereitungsschritts (STPO), der vor dem Erfassungsschritt und vor dem Auswertungsschritt durchgeführt wird, die Auswirkungen des Flugbetriebs des Luftfahrzeugs (1) für eine Mehrzahl von Versuchswerten einer reduzierten Rotationsgeschwindigkeit (Ng') des Gaserzeugers (4) quantifiziert werden, wobei die reduzierte Rotationsgeschwindigkeit (Ng') gleich der Rotationsgeschwindigkeit (Ng) des Gaserzeugers (4) des Luftfahrzeugs ist, angepasst an die Umgebungstemperatur (TO) außerhalb des Luftfahrzeugs, wobei die Mehrzahl von Versuchswerten von einem minimalen Versuchswert bis zu einem maximalen Versuchswert reicht,
- während des Erfassungsschritts (STP1):

a) die Drehgeschwindigkeit des Gaserzeugers (4) soweit erhöht wird, bis der Turbomotor eine maximale Leistung entwickelt,
b) die Drehgeschwindigkeit des Gaserzeugers (4) soweit reduziert wird, bis die reduzierte Drehgeschwindigkeit (Ng') einen Versuchswert erreicht,
c) das Luftfahrzeug stabilisiert wird, indem die reduzierte Rotationsgeschwindigkeit (Ng') während einer von dem Konstrukteur vorgegebenen Stabilisierungszeitdauer konstant gehalten wird, und die Erfassung eines jeden Überwachungswertes ausgeführt wird, und

- während des Auswertungsschritts (STP2) der Zustandsüberprüfung mindestens ein Betriebsbereich festgelegt wird unter Verwendung eines Überwachungswertes und der Flugbetriebsauswirkungen, die der reduzierten Rotationsgeschwindigkeit entsprechen, bei der das Luftfahrzeug stabilisiert ist, und wobei jeder Betriebsbereich für eine Bedienungsperson bereitgestellt wird, und
- während eines Aufbereitungsschritts (STP3) die Wartung des Turbomotors durchgeführt wird, wenn der Betriebsbereich unter einer von dem Konstrukteur festgelegten Grenzschwelle liegt.

2. Verfahren nach Anspruch 1,
**dadurch gekennzeichnet, dass** während des Erfassungsschritts (STP1) der Überwachungswert mindestens eines Überwachungsparameters des Turbomotors erfasst wird, der aus einer Liste auszuwählen ist, die umfasst: ein von dem Turbomotor entwickeltes Drehmoment, eine Gastemperatur (TET) am Eingang einer Hochdruckturbine (7) der Baugruppe (5), eine Gastemperatur (T45) am Eingang einer Arbeitsturbine (6) der Baugruppe (5), und eine Rotationsgeschwindigkeit (Ng) des Gaserzeugers.

3. Verfahren nach einem der Ansprüche 1 bis 2, **dadurch gekennzeichnet, dass** während der Auswertungsphase (STP2) eine Überwachungsleistung bestimmt wird, die eine Funktion eines Drehmoments (Tq) ist, das von dem Turbomotor (3) entwickelt wird, und des Verlaufs einer Rotationsgeschwindigkeit (Nr) der Drehflügel (300), und dann ein Betriebsbereich bestimmt wird, indem die Differenz der Überwachungsleistung und den Flugbetriebsauswirkungen, die der reduzierten Rotationsgeschwindigkeit (Ng') während der Erfassungsphase (STP1) entsprechen, mit einer minimalen theoretischen Leistung, die von dem Konstrukteur vorgegeben ist, verglichen werden.

4. Verfahren nach einem der Ansprüche 1 bis 3, **dadurch gekennzeichnet, dass** während des Erfassungsschritts (STP1) die maximale Leistung erreicht ist, wenn:

   - die reduzierte Rotationsgeschwindigkeit den maximalen Versuchswert erreicht oder
   - ein Überwachungsparameter des Turbomotors einen von dem Konstrukteur vorgegebenen Grenzwert erreicht.

5. Verfahren nach einem der Ansprüche 1 bis 4, **dadurch gekennzeichnet, dass** das Luftfahrzeug mindestens zwei Turbomotoren (3) aufweist, wobei während des Erfassungsschritts (STP1) die maximale Leistung erreicht ist, wenn:

   - die reduzierte Rotationsgeschwindigkeit den maximalen Versuchswert erreicht, oder
   - ein Überwachungsparameter des Turbomotors einen von dem Konstrukteur vorgegebenen Grenzwert erreicht, oder
   - eine Differenz zwischen einem ersten Drehmoment, das von dem überprüften Turbomotor entwickelt wird, und einem zweiten Drehmoment, das von einem zweiten Turbomotor entwickelt wird, einen Schwellenwert erreicht, der von dem Konstrukteur vorgegeben ist.

6. Verfahren nach einem der Ansprüche 1 bis 5, **dadurch gekennzeichnet, dass** das Luftfahrzeug mindestens zwei Turbomotoren (3) aufweist, wobei am Ende des Erfassungsschritts (STP1) die Turbomotoren (3) synchronisiert werden, damit jeder Turbomotor (3) die gleiche Leistung liefert.

7. Verfahren nach einem der Ansprüche 1 bis 6, **dadurch gekennzeichnet, dass** während des Erfassungsschritts (STP1) ein Alarm erzeugt wird.

8. Verfahren nach einem der Ansprüche 1 bis 7, **dadurch gekennzeichnet, dass** das Luftfahrzeug zwei Turbomotoren (3) aufweist, wobei während des Erfassungsschritts (STP1) die Rotationsgeschwindigkeit des Gaserzeugers (4) des Turbomotors (1), der keine Zustandsüberprüfung erfährt, verringert wird, damit die beiden Turbomotoren zusammen das Doppelte einer kontinuierlichen maximalen Leistung liefern, die von dem Konstrukteur für jeden Turbomotor festgelegt ist.

9. Verfahren nach einem der Ansprüche 1 bis 8, **dadurch gekennzeichnet, dass** die reduzierte Rotationsgeschwindigkeit (Ng') durch die folgende Beziehung erhalten wird:

$$Ng' = Ng\sqrt{\frac{288.15}{T0}}$$

   wobei "Ng" die Rotationsgeschwindigkeit des betroffenen Gaserzeugers bezeichnet, "TO" die Außentemperatur am Luftfahrzeug in Grad Kelvin bezeichnet.

10. Überprüfungsvorrichtung (10), welche das Verfahren nach einem der Ansprüche 1 bis 9 durchführt, um eine Zustandsüberprit'fung mindestens eines Turbomotors (3) eines Drehflügel-Luftfahrzeugs (1) durchzuführen, wobei der Turbomotor (3) einen Gaserzeuger (4) und eine Baugruppe (5) aufweist, die mindestens eine Turbine (6, 7) aufweist, **dadurch gekennzeichnet, dass** die Überprüfungsvorrichtung (10) mindestens eines Turbomotors (3) aufweist:

   - ein Speichermittel (11), welches Auswirkungen des Flugbetriebs des Luftfahrzeugs (1) für eine Mehrzahl von Versuchswerten bei einer reduzierten Rotationsgeschwindigkeit (Ng') des Gaserzeugers enthält, wobei eine reduzierte Rotationsgeschwindigkeit (Ng') gleich einer Rotationsgeschwindigkeit (Ng) des Gaserzeugers (4), angepasst an eine Umgebungstemperatur (TO) außerhalb des Luftfahrzeugs, ist, wobei die Mehrzahl von Versuchswerten von einem minimalen Versuchswert bis zu einem maximalen Versuchswert reicht, und
   - ein Überprüfungsmittel (12) zum:

      a) Erhöhen der Rotationsgeschwindigkeit des Gaserzeugers bis der der Turbomotor eine maximale Leistung entwickelt,

b) Reduzieren der Rotationsgeschwindigkeit bis die reduzierte Rotationsgeschwindigkeit einen Versuchswert erreicht,

c) Stabilisieren des Luftfahrzeugs, indem die reduzierte Rotationsgeschwindigkeit (Ng') während einer von dem Konstrukteur vorgegebenen Stabilisierungszeit konstant gehalten wird, und Ausführen der Erfassung eines jeden Überwachungswertes, und

- ein Rechenmittel (13) zum Bestimmen mindestens eines Betriebsbereichs unter Verwendung des Überwachungswertes sowie der Auswirkungen des Flugbetriebs und eines Grenzwertes, der von dem Konstrukteur festgelegt ist, der der reduzierten Rotationsgeschwindigkeit entspricht, bei der das Luftfahrzeug stabilisiert ist, und

- ein Übertragungsmittel (14) zum Übertragen eines jeden Betriebsbereichs an eine Bedienungsperson, und

- eine Mehrzahl von Detektoren (20) zum Messen jedes Überwachungswertes und der Rotationsgeschwindigkeit des Gaserzeugers des Luftfahrzeugs.

**11.** Vorrichtung nach Anspruch 10,
**dadurch gekennzeichnet, dass** die Überprüfungsvorrichtung (10) pro Motor ein Rechenmittel und ein Überprüfungsmittel aufweist.

**12.** Vorrichtung nach Anspruch 10,
**dadurch gekennzeichnet, dass** die Vorrichtung ein von einer Bedienungsperson bedienbares Mittel (30) aufweist, um die Ausführung des Verfahrens während des Flugs anzuordnen.

**Claims**

**1.** Method for performing a health check of at least one turbine engine (3) to be monitored of an aircraft (1) having a rotary wing (300), said turbine engine (3) comprising a gas generator (4) and an assembly (5) comprising at least one turbine (6, 7), in which method:

- during an acquisition step (STP1) of the health check, said aircraft is stabilized and the monitoring value of at least one monitoring parameter (T45, TET, Tq, Ng) of said turbine engine (3) is acquired, and

- during an evaluation step (STP2) of the health check, at least one operating margin of the turbine engine is determined by comparing said monitoring value with a limit value defined by the manufacturer,

**characterized in that**:

- during a development step (STPO) performed before the acquisition step and the evaluation step, mounting effects of said aircraft (1) are quantified for a plurality of test values of a reduced speed of rotation (Ng') of said gas generator (4), said reduced speed of rotation (Ng') being equal to the speed of rotation (Ng) of the gas generator (4) of the aircraft modulated by the outside temperature (T0) of the surroundings of said aircraft, said plurality of test values ranging from a minimum test value to a maximum test value,

- during said acquisition step (STP1):

a) the speed of rotation of said gas generator (4) is increased until said turbine engine develops a maximum power,

b) said speed of rotation of the gas generator (4) is reduced until the reduced speed of rotation (Ng') reaches a test value,

c) the aircraft is stabilized by keeping said reduced speed of rotation (Ng') constant for a stabilization duration defined by the manufacturer and the acquisition of each monitoring value is performed, and

- during said evaluation step (STP2) of the health check, at least one operating margin is determined by using a monitoring value and the mounting effects corresponding to the reduced speed of rotation at which the aircraft is stabilized, and an operator is supplied with each operating margin, and

- during a treatment step (STP3), the turbine engine undergoes maintenance if said operating margin is less than a limit threshold defined by the manufacturer.

**2.** Method according to claim 1,
**characterized in that**, during the acquisition step (STP1), the monitoring value is acquired of at least one monitoring parameter of said turbine engine selected from a list including: a torque developed by the turbine engine, a temperature (TET) of the gases at the inlet of a high-pressure turbine (7) of said assembly (5), a temperature (T45) of the gases at the inlet of a free turbine (6) of said assembly (5) and a speed of rotation (Ng) of the gas generator.

**3.** Method according to any one of claims 1 to 2,
**characterized in that**, during the evaluation phase (STP2) a monitoring power is determined which is a function of a torque (Tq) developed by the turbine engine (3) and of a rotational speed (Nr) of said rotary wing (300), and then an operating margin is determined by comparing the difference between the monitoring power and the mounting effects corresponding to the reduced speed of rotation (Ng') during the acquisition phase (STP1) with a theoretical minimum power defined by the manufacturer.

**4.** Method according to any one of claims 1 to 3, **characterized in that**, during said acquisition step (STP1), said maximum power is reached when:

- the reduced speed of rotation reaches the maximum test value, or
- a monitoring parameter of said turbine engine reaches a limit defined by the manufacturer

**5.** Method according to any one of claims 1 to 4, **characterized in that** said aircraft comprises at least two turbine engines (3) and during said acquisition step (STP1) said maximum power is reached when:

- the reduced speed of rotation reaches the maximum test value, or
- a monitoring parameter of said turbine engine reaches a limit defined by the manufacturer, or
- a difference between a first torque developed by the turbine engine being checked and a second torque developed by a second turbine engine reaches a threshold defined by the manufacturer.

**6.** Method according to any one of claims 1 to 5, **characterized in that** said aircraft comprises at least two turbine engines (3) and at the end of the acquisition step (ST21) said turbine engines (3) are synchronized so that each turbine engine (3) delivers the same power.

**7.** Method according to any one of claims 1 to 6, **characterized in that** an alert is generated during said acquisition step (STP1).

**8.** Method according to any one of claims 1 to 7, **characterized in that** said aircraft comprises two turbine engines (3) and during the acquisition step (STP1) the speed of rotation of the gas generator (4) of the turbine engine (1) which is not being subjected to the health check is reduced so that both turbine engines together deliver twice a maximum continuous power defined by the manufacturer for each turbine engine.

**9.** Method according to any one of claims 1 to 8, **characterized in that** said reduced speed of rotation (Ng') is obtained using the following relationship:

$$Ng' = Ng \sqrt{\frac{288.15}{T0}}$$

where "Ng" represents the speed of rotation of the gas generator in question, and "T0" represents the temperature outside the aircraft in degrees kelvin.

**10.** Checking device (10) implementing the method according to any one of claims 1 to 9 for performing a health check of at least one turbine engine (3) of an aircraft (1) having a rotary wing, said turbine engine (3) comprising a gas generator (4) and an assembly (5) comprising at least one turbine (6,7), **characterized in that** said checking device (10) for checking at least one turbine engine (3) comprises:

- a storage means (11) containing mounting effects of said aircraft (1) for a plurality of test values of a reduced speed of rotation (Ng') of said gas generator, a reduced speed of rotation (Ng') being equal to the speed of rotation (Ng) of the gas generator (4) modulated by an outside temperature (T0) of the surroundings of the aircraft, said plurality of test values ranging from a minimum test value to a maximum test value, and
- a control means (12) to:

a) increase the speed of rotation of said gas generator until said turbine engine develops a maximum power,
b) reduce said speed of rotation until the reduced speed of rotation reaches a test value,
c) stabilize the aircraft by keeping said reduced speed of rotation Ng' constant for a stabilization duration defined by the manufacturer and perform the acquisition of each monitoring value, and

- a calculation means (13) for determining at least one operating margin by using said monitoring value together with the mounting effects and a limit value defined by the manufacturer corresponding to the reduced speed of rotation at which the aircraft is stabilized, and
- a transmission means (14) for transmitting each operating margin to an operator, and
- a plurality of sensors (20) for measuring each monitoring value and said speed of rotation of the gas generator of the aircraft

**11.** Device according to claim 10, **characterized in that** said checking device (10) comprises one calculation means and one control means per engine.

**12.** Device according to claim 10,
**characterized in that** said device comprises a manoeuvrable means (30) manoeuvrable by an operator to cause said method to be implemented in flight.

Fig.1

Fig.2

Fig.3

## RÉFÉRENCES CITÉES DANS LA DESCRIPTION

**Documents brevets cités dans la description**

- FR 2899640
- FR 2902407
- US 7487029 B